# EUROPEAN PATENT APPLICATION

(11) **EP 4 730 573 A1**
(43) Date of publication of application: **22.04.2026**
(21) Application number: 25187894.8
(22) Date of filing: 07.07.2025
(51) Int. Cl.: H01R 13/703, H01R 13/639, H01R 13/53, G06F 1/18, G06F 1/26, H01H 9/30, H01H 15/00, H01H 21/00, H01R 12/75, H01R 12/70

(54) **CONNECTING STRUCTURE AND CONNECTING BASE**

(30) Priority: 07.07.2024 US 202463668289 P
(71) Applicant: Good Way Technology Co., Ltd., New Taipei City 231 (TW)
(72) Inventor: WANG, Po-Chien, 231 NEW TAIPEI CITY (TW)
(74) Representative: Cabinet Beaumont

(57) **Abstract**

A connecting structure includes a connecting base and a connecting assembly. The connecting base includes a housing, a circuit board, and a switch. The housing has a connecting opening. The circuit board is disposed in the housing. The switch is electrically connected to the circuit board. The connecting assembly includes a plug. The plug is detachably connected to the connecting opening. The plug includes a driving part. When the plug is inserted into the connecting opening and is located at a first position relative to the connecting opening, the driving part drives the switch to turn off to control power-off of the circuit board. When the plug is inserted into the connecting opening and located at a second position relative to the connecting opening, the switch is driven to turn on to control power-on of the circuit board.

## Description

### BACKGROUND

### Field of Invention

The present disclosure relates to a connecting structure and a connecting base.

### Description of Related Art

With the emergence of various high-speed electronic peripheral products, the specifications of different docking products need to adapt to different transmission specifications so as to enhance manufacturing flexibility and reduce design costs, thereby achieving the purpose of shipping products within a short time. However, during the use of an electronic product, inserting a plug into a socket and pulling the plug out from the socket may generate a high-voltage electric arc. This easily causes carbon accumulation due to sparks, which in turn results in functional abnormality of the electronic product.

Therefore, how to propose a connecting structure and a connecting base that can solve the aforementioned problems is one of the problems that the industry is currently eager to invest in research and development resources to solve.

### SUMMARY

In view of this, one purpose of the present disclosure is to provide a connecting structure and a connecting base that can solve the aforementioned problems.

In order to achieve the above objective, in accordance with an embodiment of the present disclosure, a connecting structure includes a connecting base and a connecting assembly. The connecting base includes a housing, a circuit board, and a switch. The housing has a connecting opening. The circuit board is disposed in the housing. The switch is electrically connected to the circuit board and is configured to control power-on or power-off of the circuit board. The connecting assembly includes a plug detachably connected to the connecting opening. The plug includes a driving part. The driving part drives the switch to turn-off to control power-off of the circuit board when the plug is inserted into the connecting opening and is located at a first position relative to the connecting opening. The switch can be driven to turn-on to control power-on of the circuit board when the plug is inserted into the connecting opening and is located at a second position relative to the connecting opening.

In one or more embodiments of the present disclosure, the connecting base further includes a restoring part disposed in the housing. The restoring part drives the switch to turn-on when the plug is inserted into the connecting opening and is located at the second position relative to the connecting opening.

In one or more embodiments of the present disclosure, the connecting base further includes a limiting structure disposed in the housing. The limiting structure is configured to limit the plug from moving toward the first position when the plug is at the second position.

In one or more embodiments of the present disclosure, the connecting base further includes an actuating part connected to the switch. The housing further has a status hole, and at least a portion of the actuating part extends through the status hole.

In one or more embodiments of the present disclosure, the driving part is a bevel. The bevel pushes the actuating part to move when the plug is at the first position, so that the actuating part drives the switch to turn-off.

In one or more embodiments of the present disclosure, the actuating part includes a blocking piece. The limiting structure is formed by the blocking piece, and the blocking piece blocks the plug from moving toward the first position when the plug is at the second position.

In one or more embodiments of the present disclosure, the plug further includes an accommodating groove having a blocking surface. The driving part is a bevel located in the accommodating groove. The bevel has a step surface. The blocking piece is located between the blocking surface and the step surface when the plug is at the second position. A distance from the blocking surface to the step surface is equal to a thickness of the blocking piece.

In one or more embodiments of the present disclosure, the connecting base further includes a limiting structure disposed in the housing. The limiting structure is configured to limit the plug from moving toward the first position when the plug is at the second position.

In one or more embodiments of the present disclosure, the connecting base further includes an actuating part connected to the switch. The housing further has a status hole, and at least a portion of the actuating part extends through the status hole.

In one or more embodiments of the present disclosure, the connecting base further includes an actuating part connected to the switch. The driving part is a bevel. The bevel pushes the actuating part to move when the plug is at the first position, so that the actuating part drives the switch to turn-off.

In order to achieve the above objective, in accordance with an embodiment of the present disclosure, a connecting base detachably connected to a connecting assembly. The connecting assembly includes a plug. The plug includes a driving part. The connecting base includes a housing, a circuit board, and a switch. The housing has a connecting opening. The circuit board is disposed in the housing. The switch is electrically connected to the circuit board and is configured to control power-on or power-off of the circuit board. The driving part drives the switch to turn-off to control power-off of the circuit board when the plug is inserted into the connecting opening and is located at a first position relative to the connecting opening. The switch can be driven to turn-on to control power-on of the circuit board when the plug is inserted into the connecting opening and is located at a second position relative to the connecting opening.

In one or more embodiments of the present disclosure, the connecting base further includes a restoring part disposed in the housing. The restoring part drives the switch to turn-on when the plug is inserted into the connecting opening and is located at the second position relative to the connecting opening.

In one or more embodiments of the present disclosure, the connecting base further includes a limiting structure disposed in the housing. The limiting structure is configured to limit the plug from moving toward the first position when the plug is at the second position.

In one or more embodiments of the present disclosure, the connecting base further includes an actuating part connected to the switch. The housing further has a status hole, and at least a portion of the actuating part extends through the status hole.

In one or more embodiments of the present disclosure, the driving part is a bevel. The bevel pushes the actuating part to move when the plug is at the first position, so that the actuating part drives the switch to turn-off.

In one or more embodiments of the present disclosure, the actuating part includes a blocking piece. The limiting structure is formed by the blocking piece. The blocking piece blocks the plug from moving toward the first position when the plug is at the second position.

In one or more embodiments of the present disclosure, the plug further includes an accommodating groove having a blocking surface. The driving part is a bevel located in the accommodating groove. The bevel has a step surface. The blocking piece is located between the blocking surface and the step surface when the plug is at the second position. A distance from the blocking surface to the step surface is equal to a thickness of the blocking piece.

In one or more embodiments of the present disclosure, the connecting base further includes a limiting structure disposed in the housing. The limiting structure is configured to limit the plug from moving toward the first position when the plug is at the second position.

**In** one or more embodiments of the present disclosure, the connecting base further includes an actuating part connected to the switch. The housing further has a status hole, and at least a portion of the actuating part extends through the status hole.

**In** one or more embodiments of the present disclosure, the connecting base further includes an actuating part connected to the switch. The driving part is a bevel. The bevel pushes the actuating part to move when the plug is at the first position, so that the actuating part drives the switch to turn-off.

**In** summary, in the connecting structure and the connecting base of the present disclosure, since the connecting assembly includes a bevel having an inclined surface extending from the plug, the inclined surface can guide the actuating part so that the actuating part drives the switch to turn-off when the plug is inserted into the connecting opening of the connecting base, thereby avoiding generating a high-voltage electric arc when the connector is electrically connected to a port. **In** the connecting structure and the connecting base of the present disclosure, since a step surface is between the abutting surface of the plug and the flat surface of the bevel, the blocking piece of the actuating part is located between the step surface and the blocking surface and the blocking piece abuts against the step surface after the guiding portion of the actuating part passes the inclined surface, thereby allowing the connecting assembly less likely to be detached from the housing. In conclusion, the connecting structure and the connecting base of the present disclosure can avoid generating a high-voltage electric arc, thereby improving performance of the electronic product.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a front view of a connecting structure in accordance with an embodiment of the present disclosure;
Fig. 2 is a perspective cross-sectional view of the connecting structure based on a sectional line 2-2 of Fig. 1 in accordance with an embodiment of the present disclosure;
Fig. 3 is an exploded view of the connecting structure in accordance with an embodiment of the present disclosure;
Fig. 4 is a perspective view of a connecting assembly in accordance with an embodiment of the present disclosure;
Fig. 5 is a schematic view of the connecting structure in a first status in accordance with an embodiment of the present disclosure;
Fig. 6A is a schematic view of the connecting structure in a second status in accordance with an embodiment of the present disclosure;
Fig. 6B is a front view of the connecting structure in the second status in accordance with an embodiment of the present disclosure;
Fig. 6C is a cross-sectional view of the connecting structure based on a sectional line 6C-6C of Fig. 6B in accordance with an embodiment of the present disclosure;
Fig. 6D is a schematic view of the connecting structure in the second status and with the plug located at a first position relative to the connecting opening in accordance with an embodiment of the present disclosure;
Fig. 6E is a front view of the connecting structure in the second status and with the plug located at the first position relative to the connecting opening in accordance with an embodiment of the present disclosure;
Fig. 6F is a cross-sectional view of the connecting structure based on a sectional line 6F-6F of Fig. 6E in accordance with an embodiment of the present disclosure;
Fig. 7A is a cross-sectional view of the connecting structure in a third status in accordance with an embodiment of the present disclosure;
Fig. 7B is a front view of the connecting structure in the third status in accordance with an embodiment of the present disclosure; and
Fig. 7C is a cross-sectional view of the connecting structure based on a sectional line 7C-7C of Fig. 7B in accordance with an embodiment of the present disclosure.

### DETAILED DESCRIPTION

Hereinafter, a plurality of embodiments of the present disclosure will be disclosed in diagrams. For the sake of clarity, many details in practice will be described in the following description. However, it should be understood that these details in practice should not limit the present disclosure. In other words, in some embodiments of the present disclosure, these details in practice are unnecessary. In addition, for simplicity of the drawings, some conventionally used structures and elements will be shown in a simple schematic manner in the drawings. The same reference numbers are used in the drawings and the description to refer to the same or like parts.

Hereinafter, the structure and function of each component included in a connecting structure 1 of this embodiment and the connection relationship between the components will be described in detail.

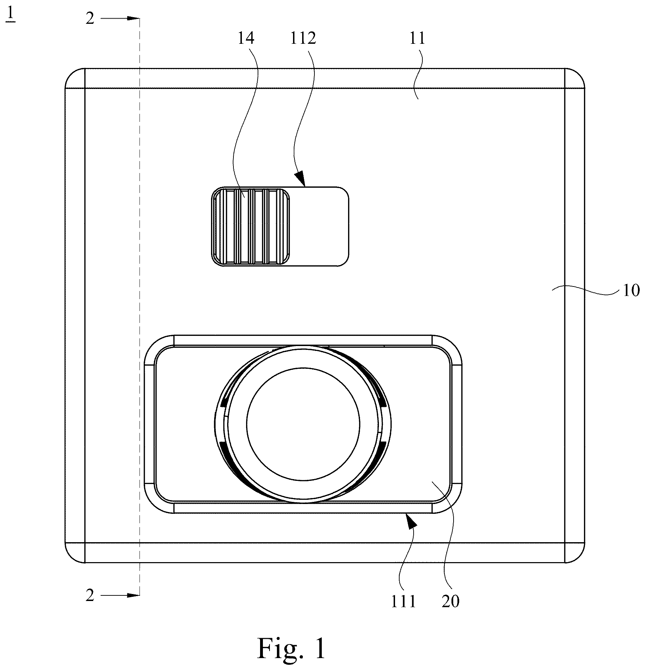

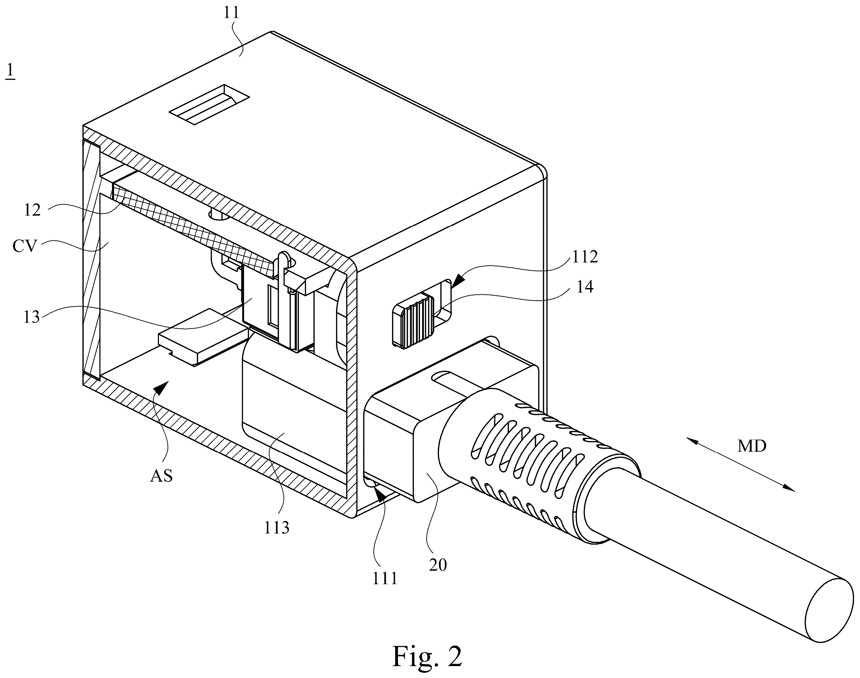

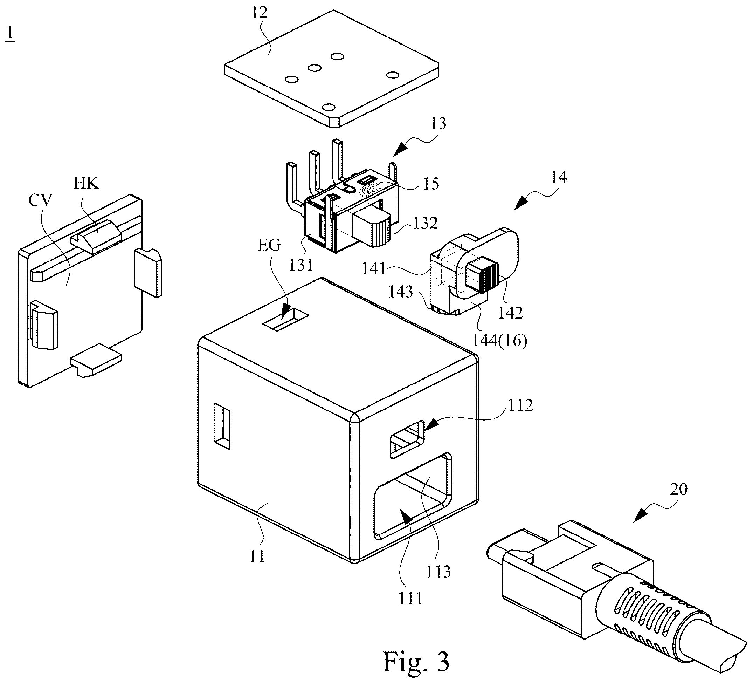

Reference is made to Fig. 1 to Fig. 3. Fig. 1 is a front view of a connecting structure 1 in accordance with an embodiment of the present disclosure. Fig. 2 is a perspective cross-sectional view of the connecting structure 1 based on a sectional line 2-2 of Fig. 1 in accordance with an embodiment of the present disclosure. Fig. 3 is an exploded view of the connecting structure 1 in accordance with an embodiment of the present disclosure. As shown in Fig. 1 to Fig. 3, in this embodiment, the connecting structure 1 includes a connecting base 10 and a connecting assembly 20, in which the connecting assembly 20 is detachably connected to the connecting base 10. The connecting base 10 includes a housing 11, a circuit board 12, a switch 13, an actuating part 14, a restoring part 15, and a limiting structure 16.

In this embodiment, the housing 11 has a connecting opening 111 and a status hole 112. The connecting assembly 20 is detachably connected to the connecting opening 111. The circuit board 12 is disposed in the housing 11 and can be powered by an external power supply (not shown). The switch 13 is disposed in the housing 11 and is electrically connected to the circuit board 12. The switch 13 can be configured to control power-on or power-off of the circuit board 12. The actuating part 14 is disposed in the housing 11 and is connected to the switch 13. The actuating part 14 can be configured to turn on or turn off the switch 13. At least a portion of the actuating part 14 passes through the status hole 112 and partially protrudes outside the housing 11. The structural configuration of the connecting structure 1 will be described in more detail below.

Reference is made again to Fig. 2. As shown in Fig. 2, in this embodiment, the connecting structure 1 further includes a cover body CV. The cover body CV is engaged with the housing 11. A cavity AS is formed in the housing 11, and the cavity AS is jointly defined by the housing 11 and the cover body CV. The switch 13 is connected to the actuating part 14 and is located in the cavity AS. The switch 13 is disposed on the circuit board 12 and is electrically connected to the circuit board 12. The switch 13 is configured to control power-on or power-off of the circuit board 12. The circuit board 12 is fixedly disposed in the housing 11 and can be powered by an external power supply (not shown). Specifically, the circuit board 12 is stationary relative to the housing 11, and the switch 13 is stationary relative to the circuit board 12. The actuating part 14 is connected to the switch 13 so that the actuating part 14 can drive the switch 13 to turn-on or turn-off, thereby achieving the function of controlling power-on or power-off of the circuit board 12. The housing 11 further includes an extending housing 113. The extending housing 113 extends from the housing 11 and is located in the cavity AS. The extending housing 113 defines the connecting opening 111. Specifically, the connecting assembly 20 is inserted into the connecting opening 111 along a mating direction MD, such that a portion of the connecting assembly 20 is accommodated in the extending housing 113, and the connecting assembly 20 is connected to the connecting opening 111.

In some embodiments, the extending housing 113, the actuating part 14, the switch 13, and the circuit board 12 are all located in the cavity AS.

In some embodiments, the actuating part 14 is at least partially accommodated in the cavity AS. Specifically, the status hole 112 runs through the housing 11, and a portion of the actuating part 14 can pass through the status hole 112 and be exposed in the status hole 112. In some other embodiments, the actuating part 14 is located outside the housing 11 and is not located in the cavity AS. However, the present disclosure is not intended to limit the design of the actuating part 14.

In some embodiments, the extending housing 113 of the housing 11 extends along the mating direction MD.

Reference is made again to Fig. 3. As shown in Fig. 3, in this embodiment, the actuating part 14 is a toggle lever, which includes a toggle lever main body 141, a bump 142, a guiding portion 143, and a blocking piece 144. The switch 13 is a toggle-type (slide-type) switch, which includes a switch main body 131 and a toggling part 132. The toggle lever main body 141 is configured to be connected to the toggling part 132 of the switch 13. The toggle lever main body 141 is located in the housing 11 (as shown in Fig. 2 and Fig. 3). The bump 142 extends from the toggle lever main body 141. The bump 142 passes through the status hole 112, and a portion thereof protrudes outside the housing 11 (as shown in Fig. 2 and Fig. 3). The guiding portion 143 and the blocking piece 144 extend from the toggle lever main body 141, and the guiding portion 143 is located at a side surface of the blocking piece 144. The guiding portion 143 is configured to contact a portion of the connecting assembly 20. Specifically, when the connecting assembly 20 is inserted into the connecting opening 111, the actuating part 14 is located over the connecting assembly 20, and the guiding portion 143 extends from a bottom surface of the toggle lever main body 141 to contact the portion of the connecting assembly 20. The switch main body 131 is disposed on the circuit board 12. The toggling part 132 is configured to control turn-on and turn-off of the switch 13. It should be noted that, in this embodiment, the switch 13 and the actuating part 14 are separate components, but the present disclosure is not limited thereto. In other embodiments, the actuating part 14 may also be directly formed by the toggling part 132 on the switch 13, that is, the toggling part 132 may be designed to have the same structure as the actuating part 14 (the toggle lever) disclosed herein. In this embodiment, the actuating part 14 in the present disclosure refers to the toggling part 132 on the switch 13. The restoring part 15 is disposed in the housing 11. More specifically, the restoring part 15 is located in the switch 13. An end of the restoring part 15 is connected to an inner surface of the switch main body 131, and the other end of the restoring part 15 is connected to the toggling part 132. The housing 11 further has an engaging hole EG, and the cover body CV further includes a hook HK. The cover body CV is combined with the housing 11 by the hook HK engaging with the engaging hole EG.

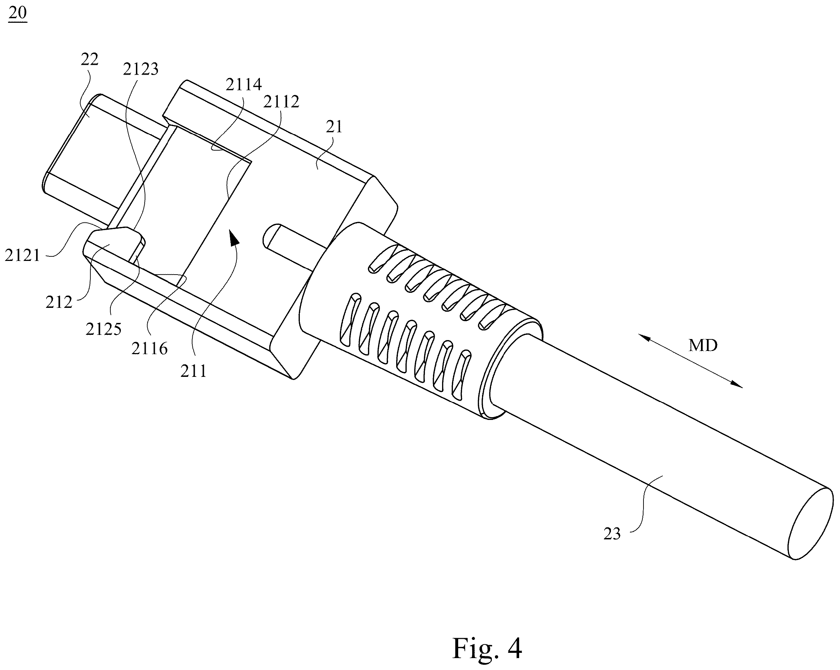

Reference is made to Fig. 4. Fig. 4 is a perspective view of a connecting assembly 20 in accordance with an embodiment of the present disclosure. As shown in Fig. 4, in this embodiment, the connecting assembly 20 is a connecting cable, but the present disclosure is not limited thereto. The connecting assembly 20 includes a plug 21 formed by being covered with an insulating material, a connector 22, and a cable 23. The connector 22 and the cable 23 are connected to the plug 21. Specifically, the connector 22 and the cable 23 are respectively connected to two sides of the plug 21. The connector 22 and the cable 23 are electrically connected to each other. The connector 22 is configured to be electrically connected to a port (not shown). Specifically, the port is disposed in the housing 11. When the plug 21 of the connecting assembly 20 is inserted into the connecting opening 111 of the connecting base 10, the connector 22 can be inserted into the port to be electrically connected thereto. In an example of the present disclosure, the plug 21 includes an accommodating groove 211 and a driving part 212. The accommodating groove 211 is formed by a recessed surface of the plug 21, but the plug 21 of the present disclosure is not necessarily required to have the accommodating groove 211. When the plug 21 is inserted into the connecting opening 111, the actuating part 14 is partially located in the accommodating groove 211. In some embodiments, the guiding portion 143 and the blocking piece 144 of the actuating part 14 are configured to be accommodated in the accommodating groove 211. In this embodiment, the driving part 212 is a bevel extending from the plug 21 and located in the accommodating groove 211. Specifically, the bevel is disposed at a side of the accommodating groove 211. In some embodiments, the bevel is located at an end of the accommodating groove 211 closest to the connector 22. The bevel is configured to drive the actuating part 14 to move.

Reference is made again to Fig. 4. As shown in Fig. 4, in this embodiment, the plug 21 further has a blocking surface 2112, a limiting surface 2114, and an abutting surface 2116. The blocking surface 2112 is connected between the limiting surface 2114 and the abutting surface 2116. Specifically, the blocking surface 2112, the limiting surface 2114, and the abutting surface 2116 define three sides of the accommodating groove 211. The blocking surface 2112 faces toward the connector 22. The limiting surface 2114 and the abutting surface 2116 are opposite to each other. A remaining side of the accommodating groove 211 is an opening, and the opening is located at the side of the accommodating groove 211 closest to the connector 22 among the four sides. In other words, the blocking surface 2112 is the side of the accommodating groove 211 farthest from the connector 22 among the four sides. As the driving part 212, the bevel further has an inclined surface 2121, a flat surface 2123, and a step surface 2125. The flat surface 2123 is connected to the inclined surface 2121. The step surface 2125 is connected to the flat surface 2123. The flat surface 2123 is connected between the inclined surface 2121 and the step surface 2125. Specifically, the inclined surface 2121 is located at a side of the bevel close to the connector 22, and the step surface 2125 is located at a side of the bevel away from the connector 22. There is a step between the flat surface 2123 and the abutting surface 2116. More specifically, the step surface 2125 is connected between the flat surface 2123 and the abutting surface 2116, such that the step is formed between the flat surface 2123 and the abutting surface 2116.

In some embodiments, the limiting surface 2114 and the abutting surface 2116 extend in parallel along the mating direction MD. In some embodiments, the flat surface 2123 and the abutting surface 2116 extend in parallel along the mating direction MD. In some embodiments, the step surface 2125 and the blocking surface 2112 extend in parallel along a direction perpendicular to the mating direction MD.

In some embodiments, in the mating direction MD, the step surface 2125 is closer to the connector 22 than the blocking surface 2112. Specifically, a distance from the step surface 2125 to the connector 22 is less than a distance from the blocking surface 2112 to the connector 22.

In some embodiments, in a direction perpendicular to the mating direction MD, the flat surface 2123 is closer to the limiting surface 2114 than the abutting surface 2116. Specifically, a distance from the flat surface 2123 to the limiting surface 2114 is less than a distance from the abutting surface 2116 to the limiting surface 2114.

In some embodiments, the inclined surface 2121 extends along the mating direction MD away from the connector 22 and toward the limiting surface 2114.

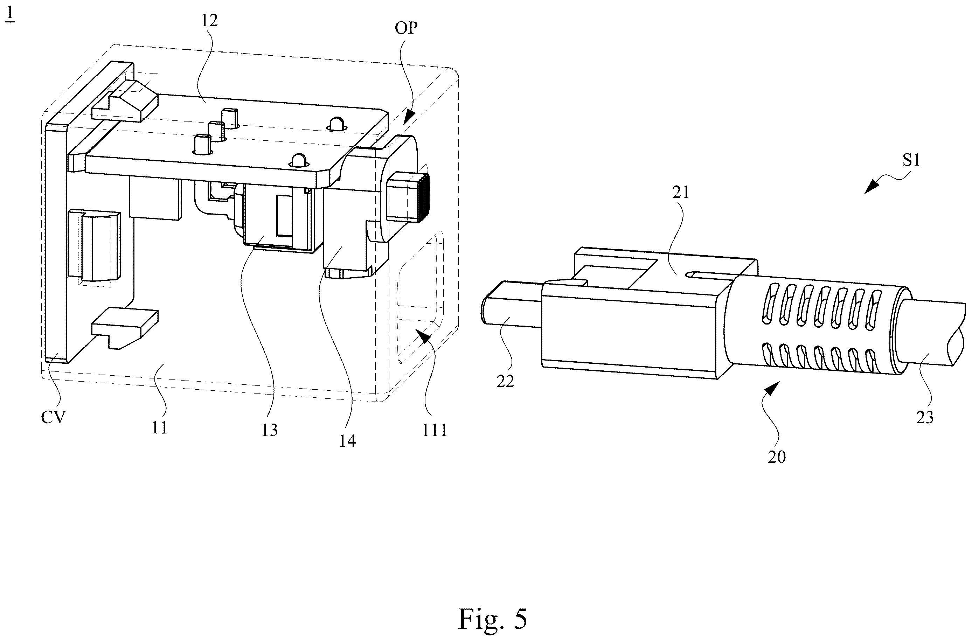

Reference is made to Fig. 5. Fig. 5 is a schematic view of the connecting structure 1 in a first status S1 in accordance with an embodiment of the present disclosure. For simplicity of description, the housing 11 in Fig. 5 is depicted in dashed lines. As shown in Fig. 5, in this embodiment, when the connecting structure 1 is in the first status S1, the connecting assembly 20 is not connected to the connecting base 10. Specifically, the connecting assembly 20 is not located in the connecting opening 111 and does not contact the actuating part 14. In the first status S1, the actuating part 14 is located at a turn-on position OP, so that the switch 13 can be in a turn-on state to allow the circuit board 12 to maintain in a power-on state. In some embodiments, at this time the bump 142 of the actuating part 14 may abut against an end of the status hole 112 (for example, a left end of the status hole 112).

In a usage scenario, a user operates the connecting assembly 20 to be inserted toward the connecting base 10. Specifically, in the first status S1, the connecting assembly 20 is moved by the user's operation toward the connecting opening 111 of the connecting base 10 along the mating direction MD, while the connecting assembly 20 is not located in the connecting opening 111 and does not contact the actuating part 14, and the switch 13 is in the turn-on state to allow the circuit board 12 to maintain in the power-on state.

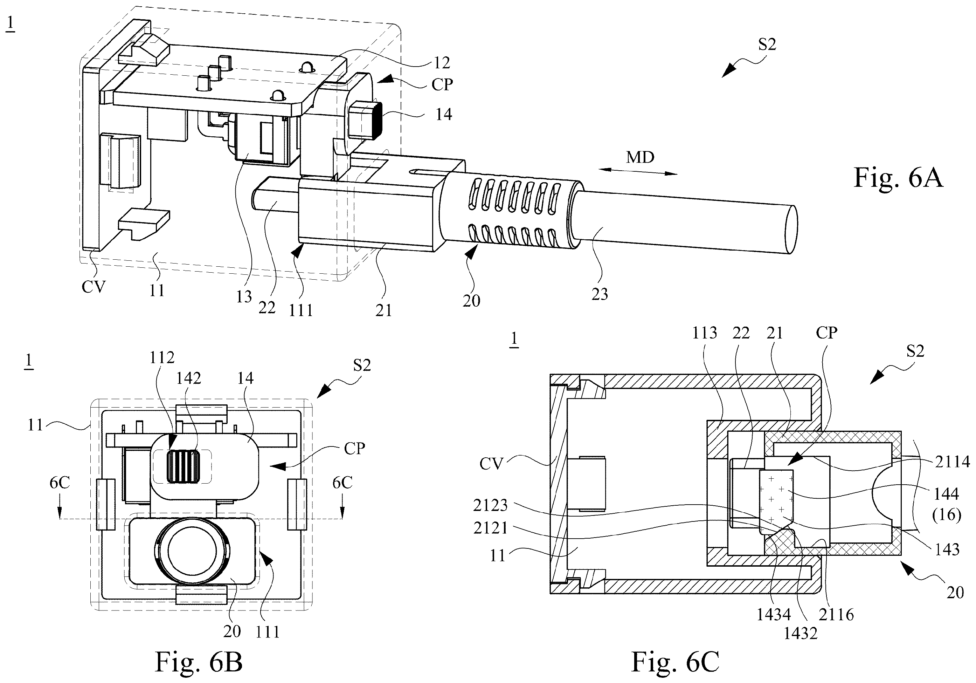

Reference is made to Fig. 6A, Fig. 6B, and Fig. 6C. Fig. 6A is a schematic view of the connecting structure 1 in a second status S2 in accordance with an embodiment of the present disclosure. Fig. 6B is a front view of the connecting structure 1 in the second status S2 in accordance with an embodiment of the present disclosure. Fig. 6C is a cross-sectional view of the connecting structure 1 based on a sectional line 6C-6C of Fig. 6B in accordance with an embodiment of the present disclosure. For simplicity of description, the housing 11 in Fig. 6A and Fig. 6B is depicted in dashed lines. As shown in Fig. 6A, Fig. 6B, and Fig. 6C, in this embodiment, when the connecting structure 1 is in the second status S2, the connecting assembly 20 is partially located in the connecting opening 111 and is in contact with the actuating part 14. During the process from the first status S1 to the second status S2, the driving part 212 drives the actuating part 14 to move to a turn-off position CP from the turn-on position OP, so that the actuating part 14 drives the switch 13 to turn-off, that is, the switch 13 is switched from a turn-on state to a turn-off state to allow the circuit board 12 to be temporarily in a power-off state. As shown in Fig. 6B, compared with the first status S1, in the second status S2, the bump 142 of the actuating part 14 no longer abuts against an end of the status hole 112 (for example, no longer abuts against the left end of the status hole 112). Specifically, as shown in Fig. 6C, when the plug 21 of the connecting assembly 20 is inserted into the connecting opening 111 of the connecting base 10, the bevel as the driving part 212 pushes the actuating part 14 to move toward a direction of the turn-off position CP. Specifically, when the plug 21 is inserted into the connecting opening 111, the inclined surface 2121 of the bevel pushes a guiding inclined surface 1432 of the guiding portion 143 of the actuating part 14 so that the actuating part 14 moves toward the limiting surface 2114, that is, the bevel can guide and drive the actuating part 14 to move toward the turn-off position CP.

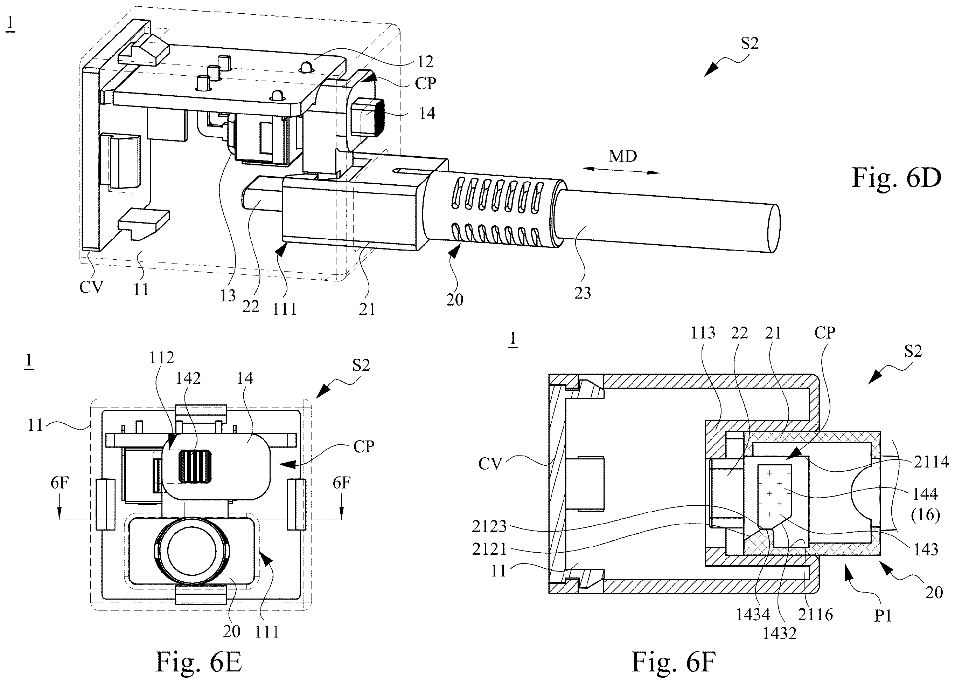

Reference is made to Fig. 6D, Fig. 6E, and Fig. 6F. Fig. 6D is a schematic view of the connecting structure 1 in the second status S2 and with the plug 21 located at a first position P1 relative to the connecting opening 111 in accordance with an embodiment of the present disclosure. Fig. 6E is a front view of the connecting structure 1 in the second status S2 and with the plug 21 located at the first position P1 relative to the connecting opening 111 in accordance with an embodiment of the present disclosure. Fig. 6F is a cross-sectional view of the connecting structure 1 based on a sectional line 6F-6F of Fig. 6E in accordance with an embodiment of the present disclosure. For simplicity of description, the housing 11 in Fig. 6D and Fig. 6E is depicted in dashed lines. As shown in Fig. 6D, Fig. 6E, and Fig. 6F, in this embodiment, as the plug 21 gradually enters the first position P1 in the connecting opening 111 along the mating direction MD, the guiding portion 143 is guided by the bevel to move toward the limiting surface 2114 to reach the turn-off position CP, and the limiting surface 2114 limits the movement of the guiding portion 143 to prevent the guiding portion 143 from disengaging from the accommodating groove 211. As shown in Fig. 6D to Fig. 6F, when the plug 21 is inserted into the connecting opening 111 and is located at the first position P1 relative to the connecting opening 111, the bevel as the driving part 212 pushes the actuating part 14 to move to the turn-off position CP to drive the switch 13 to turn-off, and the flat surface 2123 of the bevel contacts a guiding flat surface 1434 of the guiding portion 143. As shown in Fig. 6E, when the plug 21 is located at the first position P1 relative to the connecting opening 111, the bump 142 of the actuating part 14 is located at the other end of the status hole 112 (for example, a right end of the status hole 112). This causes, in the second status S2, even if the connector 22 has already contacted the port in the connecting opening 111, the circuit board 12 remains in a power-off state because the actuating part 14 drives the switch 13 to turn-off. This helps prevent occurrence of a high-voltage electric arc during insertion of the connecting assembly 20 into the port of the connecting base 10, thereby avoiding rapid degradation of electrical performance of the connecting structure 1.

In some embodiments, the inclined surface 2121 and the guiding inclined surface 1432 extend substantially in parallel, and the flat surface 2123 and the guiding flat surface 1434 extend substantially in parallel, so as to help improve the relative movement between the actuating part 14 and the plug 21. It should be noted that the driving part 212 of the present disclosure is not limited to the bevel. Any structure capable of driving the actuating part 14 to move to turn-off the switch 13 when the plug 21 is located at the first position P1 relative to the connecting opening 111 falls within the scope of the present disclosure. For example, the driving part 212 may also be a magnet or a magnetic component. Specifically, in implementation, magnets or magnetic components having the same magnetism may be respectively disposed on the plug 21 and the actuating part 14. When the plug 21 is at the first position P1, the two magnets or magnetic components correspond to each other and are brought close to within a certain distance, so that the actuating part 14 can be driven by repulsion of the same magnetism between the two magnets or magnetic components. In addition, the switch 13 of the present disclosure is not limited to a toggle-type (slide-type) switch. For example, the switch 13 may also be a reed switch. In the configuration of such a switch, the driving part 212 may be a magnet or another object capable of generating a magnetic field. When the plug 21 is inserted into the connecting opening 111 and is located at the first position P1 relative to the connecting opening 111, the magnet can drive the switch 13 to turn-off. In the embodiment adopting the reed switch, the driving part 212 (magnet) can directly drive the switch 13 to turn-off. In other words, the usage of the actuating part 14 can be omitted.

In a usage scenario, the user further operates the connecting assembly 20 to mate toward the port in the connecting opening 111. Specifically, in the second status S2, the connecting assembly 20 continues to be moved by the user's operation along the mating direction MD toward the connecting opening 111, so that the plug 21 of the connecting assembly 20 is partially located in the connecting opening 111. In addition, the driving part 212 thus drives and guides the actuating part 14 to move in a direction perpendicular to the mating direction MD (for example, the actuating part 14 moves toward the limiting surface 2114) with the plug 21 and the housing 11 moving toward to each other along the mating direction MD, thereby driving the switch 13 to turn-off to control power-off of the circuit board 12.

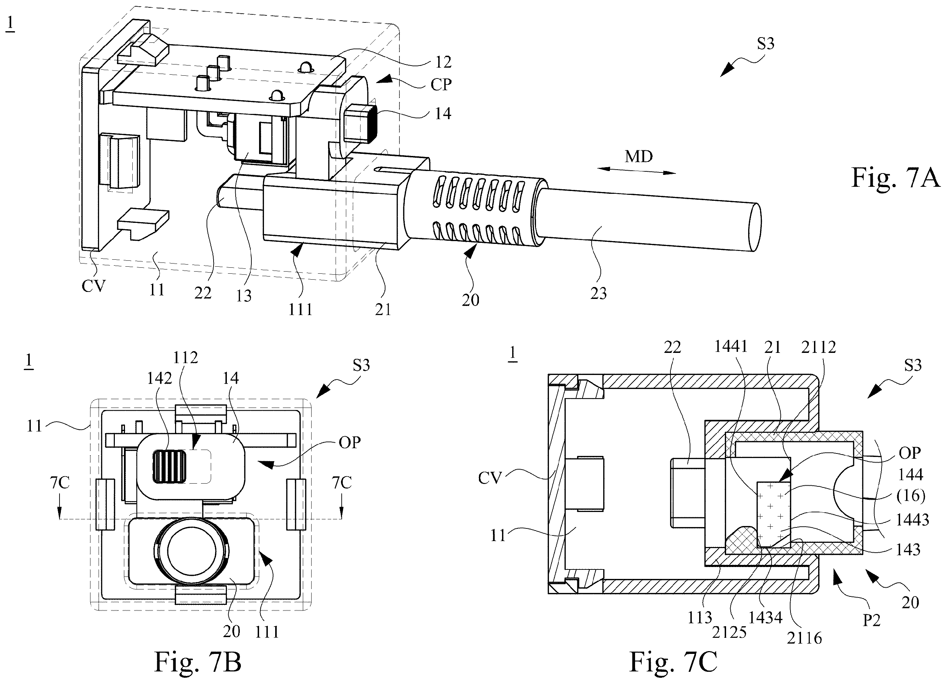

Reference is made to Fig. 7A, Fig. 7B, and Fig. 7C. Fig. 7A is a cross-sectional view of the connecting structure 1 in a third status S3 in accordance with an embodiment of the present disclosure. Fig. 7B is a front view of the connecting structure 1 in the third status S3 in accordance with an embodiment of the present disclosure. Fig. 7C is a cross-sectional view of the connecting structure 1 based on a sectional line 7C-7C of Fig. 7B in accordance with an embodiment of the present disclosure. For simplicity of description, the housing 11 in Fig. 7A and Fig. 7B is depicted in dashed lines. As shown in Fig. 7A, Fig. 7B, and Fig. 7C, in this embodiment, when the connecting structure 1 is in the third status S3, the connecting assembly 20 is partially located in the connecting opening 111 and is in contact with the actuating part 14, and the connector 22 still contacts the port. After the connecting structure 1 switches to the third status S3, the restoring part 15 drives the switch 13 to turn-on, that is, the switch 13 is restored from a temporary turn-off state to the turn-on state to allow the circuit board 12 to return to a power-on state. As shown in Fig. 7B, compared with the second status S2, in the third status S3, the bump 142 of the actuating part 14 abuts against an end of the status hole 112 (for example, the left end of the status hole 112). Specifically, as shown in Fig. 7C, when the plug 21 of the connecting assembly 20 is inserted into the connecting opening 111 of the connecting base 10 and is located at a second position P2 relative to the connecting opening 111, the restoring part 15 drives the toggling part 132 of the switch 13 to reset, so that the switch 13 is turned on, and meanwhile the actuating part 14 is also driven by the toggling part 132 to move toward the abutting surface 2116 and be reset to the turn-on position OP. In this embodiment, the switch 13 is a self-resetting switch. In this example, the restoring part 15 is a spring, a leaf spring, or another elastic structure mounted in the switch 13, but the restoring part 15 of the present disclosure is not limited thereto. In addition, it should be noted that the way for the present disclosure to restore the switch 13 to the turn-on state is not limited to directly driving the switch 13 to turn-on. In implementation, a spring or other elastic element may drive the actuating part 14 to move toward the abutting surface 2116 and be reset to the turn-on position OP, such that the actuating part 14 drives the switch 13 to turn-on. In other words, the restoring part 15 of the present disclosure may also indirectly restore the actuating part 14, thereby simultaneously driving the switch 13 to return to the turn-on state. Of course, in implementation, the bump 142 may also be manually toggled to move the actuating part 14 to the turn-on position OP, so as to drive the switch 13 to turn-on. In this implementation, the usage of the restoring part 15 can be omitted.

More specifically, in the third status S3, the step surface 2125 of the bevel as the driving part 212 abuts against a first side surface 1441 of the blocking piece 144, the guiding flat surface 1434 of the guiding portion 143 abuts against the abutting surface 2116 of the plug 21, and the blocking surface 2112 of the plug 21 contacts a second side surface 1443 of the blocking piece 144, thereby causing the connecting structure 1 to be in the third status S3. Because there is a step between the flat surface 2123 of the driving part 212 and the abutting surface 2116 of the plug 21 at the step surface 2125, the blocking piece 144 of the actuating part 14 is simultaneously limited in the mating direction MD by the step surface 2125 and the blocking surface 2112. In other words, when the plug 21 is at the second position P2, the blocking piece 144 is located between the blocking surface 2112 and the step surface 2125, and the blocking piece 144 can block the plug 21 from moving toward the first position P1 along the mating direction MD. Therefore, when the plug 21 is at the second position P2 (that is, when the connecting structure 1 is in the third status S3), the blocking piece 144 has a function of fixing the plug 21 to prevent it from being unintentionally pulled out. In this embodiment, a distance from the blocking surface 2112 to the step surface 2125 is substantially equal to a thickness of the blocking piece 144 (i.e., a distance from the first side surface 1441 to the second side surface 1443 of the blocking piece 144), which allows the connecting assembly 20 to be more stably fixed in the connecting opening 111 and prevents damage to the actuating part 14 when the connecting assembly 20 is subjected to an external pulling force. In this embodiment, the limiting structure 16 of the connecting base 10 is formed by the blocking piece 144 of the actuating part 14, but the limiting structure 16 of the present disclosure is not limited thereto.

In a usage scenario, the user further operates the connecting assembly 20 to mate toward the port in the connecting opening 111, so that the connecting assembly 20 is electrically connected to the port in the connecting opening 111. Specifically, in the third status S3, the connecting assembly 20 is further moved by the user's operation along the mating direction MD into the connecting opening 111 such that the plug 21 of the connecting assembly 20 is partially located in the connecting opening 111.

In some embodiments, the first side surface 1441 and the second side surface 1443 are located on opposite sides of the blocking piece 144, and the guiding inclined surface 1432 and the guiding flat surface 1434 of the guiding portion 143 are located on a side of the blocking piece 144 and connected between the first side surface 1441 and the second side surface 1443. However, in some other embodiments, the guiding portion 143 may not include the guiding inclined surface 1432. Alternatively, in some embodiments in which the guiding portion 143 includes the guiding inclined surface 1432 and the guiding flat surface 1434, the bevel as the driving part 212 may not include the inclined surface 2121.

In a usage scenario, when the user intends to insert the connecting assembly 20 into the connecting opening 111 of the housing 11, the user does not need to manually toggle the actuating part 14. Instead, the user can complete mating of the connecting assembly 20 and the connecting base 10 through a sequence of changes from the first status S1, the second status S2, and the third status S3.

In another usage scenario, when the user intends to remove the connecting assembly 20 from the connecting opening 111 of the housing 11, the user may manually toggle the bump 142 to move the actuating part 14 to the turn-off position CP, so that the blocking piece 144 is no longer located between the blocking surface 2112 of the accommodating groove 211 and the step surface 2125 of the bevel as the driving part 212. Thereafter, the connecting assembly 20 can be removed from the connecting opening 111.

From the above detailed description of the specific embodiments of the present disclosure, it can be clearly seen that in the connecting structure and the connecting base of the present disclosure, since the connecting assembly includes a bevel having an inclined surface extending from the plug, the inclined surface can guide the actuating part so that the actuating part drives the switch to turn-off when the plug is inserted into the connecting opening of the connecting base, thereby avoiding generating a high-voltage electric arc when the connector is electrically connected to a port. In the connecting structure and the connecting base of the present disclosure, since a step surface is between the abutting surface of the plug and the flat surface of the bevel, the blocking piece of the actuating part is located between the step surface and the blocking surface and the blocking piece abuts against the step surface after the guiding portion of the actuating part passes the inclined surface, thereby allowing the connecting assembly less likely to be detached from the housing. In conclusion, the connecting structure and the connecting base of the present disclosure can avoid generating a high-voltage electric arc, thereby improving performance of the electronic product.

## Claims

1. A connecting structure (1), **characterized by** comprising:
a connecting base (10), comprising:
a housing (11) having a connecting opening (111);
a circuit board (12) disposed in the housing (11); and
a switch (13) electrically connected to the circuit board (12) and configured to control power-on or power-off of the circuit board (12); and a connecting assembly (20), comprising:
a plug (21) detachably connected to the connecting opening (111), wherein the plug (21) comprises a driving part (212),
wherein the driving part (212) drives the switch (13) to turn-off to control power-off of the circuit board (12) when the plug (21) is inserted into the connecting opening (111) and is located at a first position (P1) relative to the connecting opening (111), and
wherein the switch (13) can be driven to turn-on to control power-on of the circuit board (12) when the plug (21) is inserted into the connecting opening (111) and is located at a second position (P2) relative to the connecting opening (111).

2. The connecting structure (1) of claim 1, **characterized in that** the connecting base (10) further comprises a restoring part (15) disposed in the housing (11), and the restoring part (15) drives the switch (13) to turn-on when the plug (21) is inserted into the connecting opening (111) and is located at the second position (P2) relative to the connecting opening (111).

3. The connecting structure (1) of claim 1 or 2, **characterized in that** the connecting base (10) further comprises a limiting structure (16) disposed in the housing (11), and the limiting structure (16) is configured to limit the plug (21) from moving toward the first position (P1) when the plug (21) is at the second position (P2).

4. The connecting structure (1) of any of claims 1 to 3, **characterized in that** the connecting base (10) further comprises an actuating part (14) connected to the switch (13), and wherein the housing further has a status hole (112), and at least a portion of the actuating part (14) extends through the status hole (112).

5. The connecting structure (1) of any of claims 1 to 4, **characterized in that** the driving part (212) is a bevel, and the bevel pushes the actuating part (14) to move when the plug (21) is at the first position (P1), so that the actuating part (14) drives the switch (13) to turn-off.

6. The connecting structure (1) of any of claims 1 to 5, **characterized in that** the actuating part (14) comprises a blocking piece (144), and the limiting structure (16) is formed by the blocking piece (144), and the blocking piece (144) blocks the plug (21) from moving toward the first position (P1) when the plug (21) is at the second position (P2).

7. The connecting structure (1) of any of claims 1 to 6, **characterized in that** the plug (21) further comprises an accommodating groove (211) having a blocking surface (2112), the bevel is located in the accommodating groove (211) and has a step surface (2125), wherein the blocking piece (144) is located between the blocking surface (2112) and the step surface (2125) when the plug (21) is at the second position (P2), and wherein a distance from the blocking surface (2112) to the step surface (2125) is equal to a thickness of the blocking piece (144).

8. A connecting base (10) **characterized by** detachably connected to a connecting assembly (20), the connecting assembly (20) comprising a plug (21), wherein the plug (21) comprises a driving part (212), the connecting base (10) comprising:
a housing (11) having a connecting opening (111);
a circuit board (12) disposed in the housing (11); and
a switch (13) electrically connected to the circuit board (12) and configured to control power-on or power-off of the circuit board (12),
wherein the driving part (212) drives the switch (13) to turn-off to control power-off of the circuit board (12) when the plug (21) is inserted into the connecting opening (111) and is located at a first position (P1) relative to the connecting opening (111),
wherein the switch (13) can be driven to turn-on to control power-on of the circuit board (12) when the plug (21) is inserted into the connecting opening (111) and is located at a second position (P2) relative to the connecting opening (111).

9. The connecting base (10) of claim 8, **characterized by** further comprising a restoring part (15) disposed in the housing (11), wherein the restoring part (15) drives the switch (13) to turn-on when the plug (21) is inserted into the connecting opening (111) and is located at the second position (P2) relative to the connecting opening (111).

10. The connecting base (10) of claim 8 or 9, **characterized by** further comprising a limiting structure (16) disposed in the housing (11), wherein the limiting structure (16) is configured to limit the plug (21) from moving toward the first position (P1) when the plug (21) is at the second position (P2).

11. The connecting base (10) of any of claims 8 to 10, **characterized by** further comprising an actuating part (14) connected to the switch (13), wherein the housing (11) further has a status hole (112), and at least a portion of the actuating part (14) extends through the status hole (112).

12. The connecting base (10) of any of claims 8 to 11, **characterized in that** the driving part (212) is a bevel, and the bevel pushes the actuating part (14) to move when the plug (21) is at the first position (P1), so that the actuating part (14) drives the switch (13) to turn-off.

13. The connecting base (10) of any of claims 8 to 12, **characterized in that** the actuating part (14) comprises a blocking piece (144), and the limiting structure (16) is formed by the blocking piece (144), and the blocking piece (144) blocks the plug (21) from moving toward the first position (P1) when the plug (21) is at the second position (P2).

14. The connecting base (10) of any of claims 8 to 13, **characterized in that** the plug (21) further comprises an accommodating groove (211) having a blocking surface (2112), the bevel is located in the accommodating groove (211) and has a step surface (2125), wherein the blocking piece (144) is located between the blocking surface (2112) and the step surface (2125) when the plug (21) is at the second position (P2), and wherein a distance from the blocking surface (2112) to the step surface (2125) is equal to a thickness of the blocking piece (144).
